# EUROPEAN PATENT APPLICATION

(11) **EP 2 870 882 A1**
(43) Date of publication of application: **13.05.2015**
(21) Application number: 13199053.3
(22) Date of filing: 20.12.2013
(51) Int. Cl.: A23G 1/54, A23G 3/34, A23G 3/54

(54) **Processing in making ready to eat confectionery snack shapes for decoration**

(30) Priority: 12.11.2013 US 201314077810
(71) Applicant: Angkhasekvilai, Paisal, 11120 Nonthaburi (TH)
(72) Inventor: Angkhasekvilai, Paisal, 11120 Nonthaburi (TH)
(74) Representative: Novagraaf Technologies

(57) **Abstract**

A process for ready to eat confectionery snack included a fruit chewy casing with center filling. The filling can be jam-like, sugar paste-like, other substance like. The product shapes can have a variety of shapes or not limited to create and various colour for recreational use.

## Description

### FILED OF THE INVENTION

The present invention relate to process of fruit chewy with center filling and forming to various shapes, and more particularly to the process of fruit chewy casing and filling consisting of at least jam-like, sugar paste-like or other substance.

### BACKGROUND

The invention relates to process for making ready to eat confection, a process for ready to eat confectionery snack included a chewy casing and filling. This product typically contain combined of fruit puree, sugar, flour, acid, fiber, artificial colours, flavour and other ingredients.

The confectionary can be ready to eat decoration product for cake, cupcake, party, birthday party. The chewy casing with center filling in particularly to the process of chewy casing and center filling consisting at least jam-like, sugar paste-like or other substance and process of shaping, fruit chewy can be forming to various shapes.

### BRIEF SUMMARY OF THE INVENTION

The present invention provides a process for making ready to eat confectionery snack, the production of fruit chewy snack and several of shapes for decoration product. The fruit chewy snack comprises filling and a case. A case which comprises glucose, sugar, fruit puree, wheat flour, gelling agent mixing the case materials together, sheeting by extruder, and encasing a filling jam-like, sugar paste-like and other ingredients. Wherein, the casing can have total soluble solid in a range about 70 to 90 degrees Brix and all type of filling should be have total soluble solid in a range about 70 to 95 degrees Brix.

Process for forming to shapes able to produced variety shapes such as heart, triangle, round, half moon, star, bowtie, butterfly, ribbon and more.

### BRIEF DESCRIPTION OF THE DRAWINGS

The drawing depicts a schematic flow sheet. The components in the drawings are not necessarily to scale.
FIG. 1 shows a process for making ready to eat confectionery snack for heart, square, bundles, triangle or round shapes with center filling.
FIG.2 shows a process for making ready to eat confectionery snack for bow-tie, butterfly, or ribbon shapes.
FIG. 3A shows an example final shape of ready to eat confectionery snack with center filling.
FIG. 3B shows an example final shape of ready to eat confectionery snack with center filling.
FIG. 3C shows an example final shape of ready to eat confectionery snack with center filling.
FIG. 3D shows an example final shape of ready to eat confectionery snack with center filling.
FIG. 3E shows an example final shape of ready to eat confectionery snack with center filling.
FIG. 4A shows example final shapes of ready to eat confectionery snack without filling.
FIG. 4B shows example final shapes of ready to eat confectionery snack without filling.
FIG. 4C shows example final shapes of ready to eat confectionery snack without filling.

### DETAILED DESCRIPTION

Consequently, in a first aspect, the invention relates to a method of processing ready to eat confectionery snack, fruit chewy casing with a center filling for decorating product such as, cake, cupcake, ice cream, party, birthday party and anniversary event.

In a fruit chewy gummy mixture, the major ingredients comprise glucose, sugar, flour and fruit puree, in amount of about 30 to 40 per cent, 20 to 30 per cent, 25 to 30 per cent, 3 to 40 per cent by weight.

The center filling material may consist of, but this not limited to the following; sugar paste filling material which may contain sugar, glucose syrup, gelling agent, wheat flour, fat, artificial and/or natural colour, artificial and/or natural flavour, and other minor ingredients. Fruit filling material which may contain fruit puree, sugar, gelatine, pectin, artificial colour, natural and artificial flavour, and other minor ingredients, other material may also be utilized in the center filling material.

The fruit filling are made with a base of fruit puree, sugar, gelling agent such as pectin, gelatine and starch. The gelling agent are give them a distinctive chewy texture that ranges from soft to very firm, depending amount of gelling agent used.

The filling ingredients are cooking by blender tank or mixing tank at temperature in a range 28 to 60°C. For the fruit filling cooking the filling material can have total soluble solid about 70 to 95 degrees Brix. After cooking the filling materials may be transported though a chamber.

The fruit filling, can have a texture like a jam the ingredients comprising, fruit puree, fruit juice, gelling agent, sugar, artificial and/or natural colour and flavour. The fruit filling ingredients are mixing in a mixing tank at a temperature in rang of 45 to 55°C. The fruit filling mixture can have total soluble solid in range of 70 to 95 degrees Brix, a moisture content in range of 25 to 30 weight content and water activity of fruit filling in range 0.50 to 0.85.

The filling, sugar paste - like the ingredients comprising, sugar powder, wheat flour, glucose, gelatine, fat, artificial and/or natural colour and artificial and/or natural flavour. The sugar paste filling ingredients are mixed in a mixing tank at a room temperature.

The sugar paste ingredients are mixed in a mixing tank at a room temperature in rang of 28 to 35°C. The sugar paste mixtures can have total soluble solid in a range of 70 to 95 degrees Brix and moisture content in a range of 2.0 to 2.7 weight per cent, preferably less than 2.7 weight per cent and water activity in a range 0.4-0.6.

In a preparing the casing according to the invention, the chewy casing comprises 8 to 13 per cent moisture. The ingredient of chewy casing can be transferred to a mixing tank before being sheets for make a case. Prior to sheeting by extruder, it is preferred the mixture have a sugar content in a range of 70 to 90 degrees Brix. The chewy casing materials such as fruit puree, sugar, wheat flour, gelling agent is mixed in the mixing tank.

The chewy casing, fruit ingredients can be such as pineapple puree, carrot puree, tomato puree, apple puree, strawberry puree or other kind of fruit puree. The fruit puree can alternatively contain fruit puree at 40 per cent weight of product. The chewy casing mixture can contain less than 40 weight per cent fruit puree, example fruit puree can have at least 1, 3, 5, 10, 15, 20, 25, 30, 35 weight per cent.

The process for preparing the chewy casing can be prepared by mixing one or more fruit puree to a mixture.

The fruit chewy casing ingredients **1** are mixing **2** at a temperature in the range 50 to 65°C until a casing mixture can have total soluble solid in a range of 70 to 90 degrees Brix and transferred the casing mixture from the mixing tank **2** to the pump hopper of an extruder (not showed). From the pump hopper of an extruder **3,** the casing mixture will to the feed pump transferred to an extruder **3** and will be cooked, at range of temperature about 130 to 170°C. The flavour and colour are added by the metering pump before making to sheets.

The fruit chewy casing ingredients **1** can be passed through an extruder. The extrusion process **3,** the casing materials can be fed into the extruder at temperature in a range of 130 to 170°C. In a preferred embodiment to the sheets for the sheets comprises the moisture content about 8 to 13 per cent, the thick of sheets in a range of 0.5 to 3.0 mm, the width of sheets in a range about 250 to 500 mm and water activity in a range of 0.5-0.6, the great water activity content should not over 0.6

The sheets from an extruder **3** has the first sheet (1a) and the second sheet (1b) for casing are passing through the cooling tunnel **5** can be cooled at temperature in a range 18 to 35°C in a relative humanity in a range 35 to 55 per cent. US 2011/026837 said that, the cooling tunnel may be any apparatus that operates to cool the mixture. The cooling tunnel is preferably maintained at a temperature below room temperature, as most desirably about 15°C Depending upon the desired level of cooling of the extruded product, the cooling tunnel may be any temperature sufficient to achieve the level of cooling desired.

The extruder can produce the sheets in different colour, single colour, two colours, three colours, four colours, or more colours in the same sheet. For example, the sheet can have combined 2 colours, pink and red colour or for 3 colours at the sheet can have blue, green, and yellow colour.

The sheets can be waxing or sugar sanding **4A** after made to sheets or can be waxing or sugar sanding after forming to shape **4B.**

A filling material **6A** contained between said sheet 1a and sheet 1b in a bulbous center area of one of the sheets, the periphery of the first and the second sheets being compressively conjoined so as to form a peripheral flange around the product and to thereby encapsulate the filling material there within.

The forming machine comprises two sheet rollers 1 and 2 with a filler material hopper located there between. The sheet 1a and 1b process though secondary forming rolls 1 and 2 which size the sheets 1a and 1b to the proper thickness. The sheet 1a is fed around a tension idler over the top of the female die roll 1 and around the die rolls 2 and drum roll which cooperates therewith. The sheet 1b is simultaneously fed though the secondary forming rolls, around tension idler and into the nip where is the sheet 1b is combined with the filler materials and upper sheet 1a. The cutter segment the sheet into individual fruit gummy with center filled.

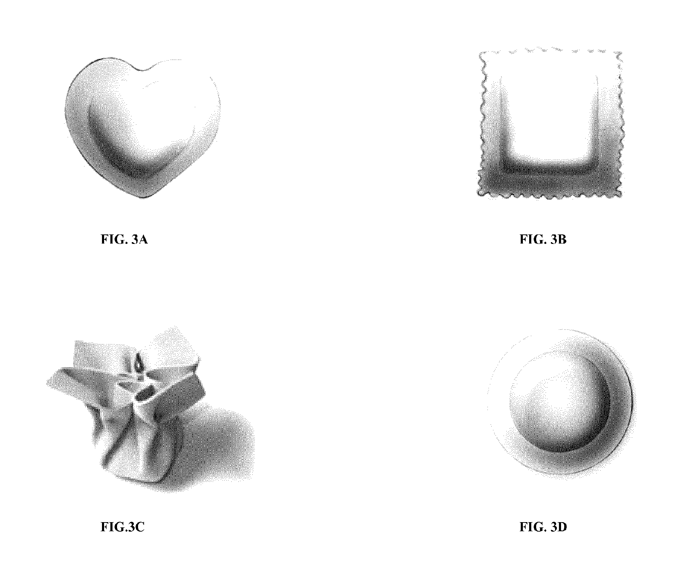

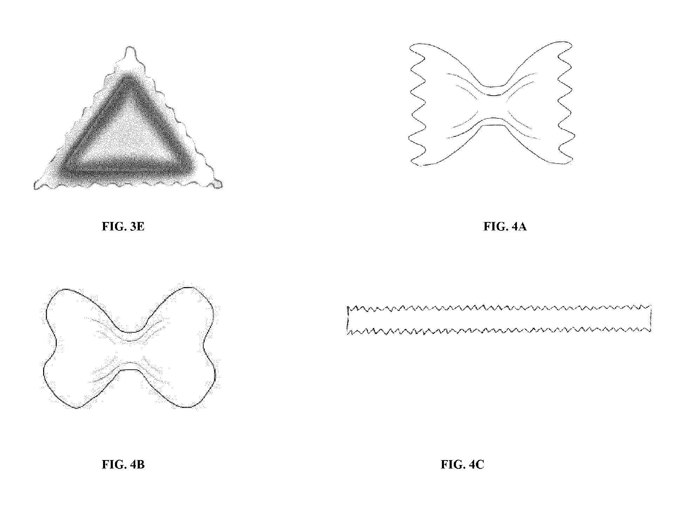

The fruit chewy with filling pass from a forming machine 6A can be forming variety shape such as heart, pillow, square, bundles, round or triangle or more shapes. (Showed in FIG. 3A to FIG. 3E)

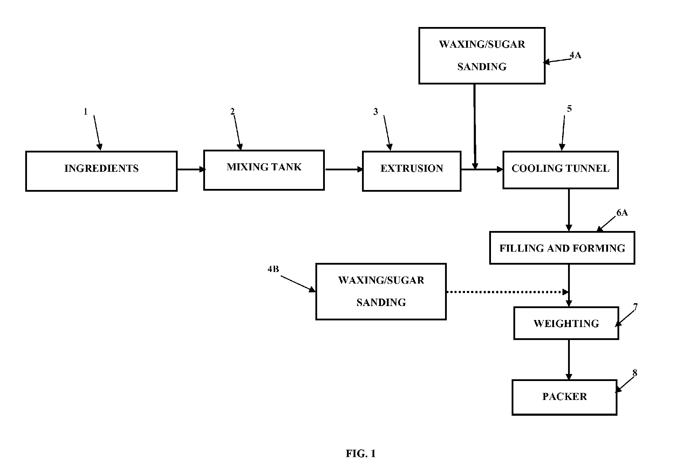

In the FIG. 1 showed, process for making ready to eat decoration fruit chewy in a process of the sheet in from glucose, sugar, wheat flour, acid, fruit puree or other supply **1** fed into a mixing tank **2** and pass through an extrusion process**3** being the sheets can be waxing or sugar sanding process **4A,** cooled in a cooling tunnel **5,** can be pass through a filling and forming process **6A** such as heart, pillow, bundles, round, or triangle shapes (showed in FIG3A to 3E). The products that can be further weighed **7** and packaged **8.**

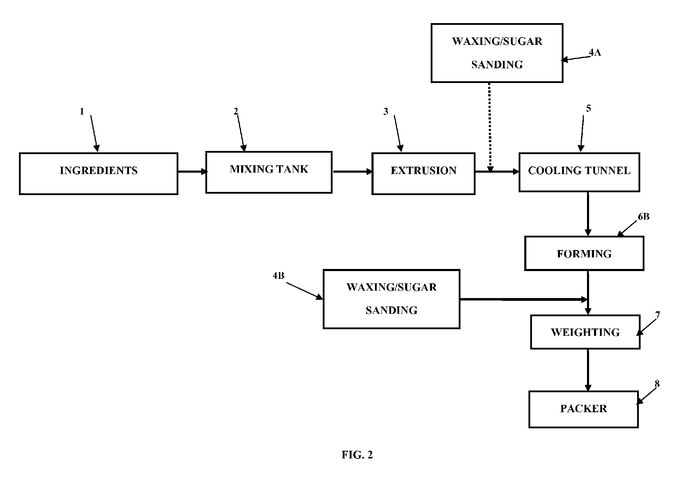

An optional showed in the FIG. 2, the sheets from an extrusion process**3**can be passed through cooling tunnel **5,** forming process **6B** and then waxing or sugar sanding process **4B,** weighed **7** and packaged **8.** For example, the sheets passed through forming process can be bow-tie, butterfly, or ribbon shape (FIG. 4A to FIG. 4C). The product was packaged in metalized bag or other bags such as polypropylene or polyethylene to prevent moisture pick up from the air.

A fruit chewy gummy formulation is show below

| Ingredients | % by Weight |
|---|---|
| Glucose | 30-40 |
| Sugar | 20-35 |
| Wheat flour | 25-30 |
| Acid | 1-2 |
| Fruit puree | 3-5 |

### Example 1 strawberry fruit chewy casing

| Ingredients | % by Weight |
|---|---|
| Glucose | 30-40 |
| Sugar | 20-35 |
| Wheat flour | 25-30 |
| Acid | 1-2 |
| Strawberry puree | 3-5 |

**Various examples of the filling are set forth below:**

### Example 2 fruit filling

| Ingredients | % by Weight |
|---|---|
| Sugar | 30-40 |
| Fruit puree | 30-40 |
| Acid | 0.4 |
| Natural or artificial flavour | 0.005-0.01 |
| Natural or artificial colour | 0.005-0.01 |

### Example 3 sugar paste filling

| Ingredients | % by Weight |
|---|---|
| Powdered sugar | 40-60 |
| Wheat flour | 20-25 |
| Glucose syrup | 10-15 |
| Fat | 4 |
| Shortening | 3-5 |

### Example 4 Custard Filling

| Ingredients | % by Weight |
|---|---|
| Powdered Sugar | 65-75 |
| Glucose syrup | 15-20 |
| Wheat flour | 10-15 |
| Fat | 4 |
| Custard powder | 3 |
| Flavour | 0.2 |

### Example 5 Green Tea Filling

| Ingredients | % by Weight |
|---|---|
| Powdered Sugar | 65-75 |
| Glucose syrup | 15-20 |
| Wheat flour | 10-15 |
| Fat | 4 |
| Green tea powder | 2 |
| Flavour | 0.2 |

## Claims

1. The process for making ready to eat confectionery snack **characterised in that** it is having:
(a) ready to eat confectionery snack with center filling;
(b) ready to eat confectionery snack without filling.

2. The process of claim 1, ready to eat confectionery snack with center filling product **characterised in that** it comprises:
(a) ingredient of fruit chewy casing comprising sugar, glucose, wheat flour, fruit puree, and gelling agent;
(b) ingredient of fruit filling comprising; fruit puree, sugar, gelling agent, colour and flavour;
(c) ingredient of sugar paste filling comprising sugar, glucose syrup, fruit, gelling agent, colour and flavour.

3. The process of claim 1, **characterised in that** the filling substantially surrounded by a casing.

4. The process of claim 3 **characterised in that** the casing comprising at least 50 to 70 per cent by weight of the product.

5. The process of claim 1 **characterised in that** the center filling comprising at least 30 to 50 per cent by weight of the product.

6. The process of claim 3 **characterised in that** the casing have total soluble solid in a range about 70 to 90 degrees Brix.

7. The process of claim 1, **characterised in that** the filling can be jam-like, sugar paste-like or substance-like.

8. The process of claim 1, a fruit filling **characterised in that** it comprises:
(a) about 30 to 40 per cent of sugar
(b) about 30 to 40 per cent of fruit puree
(c) about 1 to 2 per cent of gelling agent.

9. The process of claim 1, a sugar paste filling **characterised in that** it comprises:
(a) about 40 to 60 per cent of sugar powder
(b) about 20 to 25 per cent of wheat flour
(c) about 10 to 15 per cent of glucose syrup
(d) about 1 to 2 per cent of gelling agent.

10. The process of claim 1, ready to eat confectionery snack **characterised in that** it comprises a food grade starch is rice starch or potato starch or combined thereof.

11. The process of claim 1, a ready to eat confectionery snack **characterised in that** the ratio of the weight of the casing to that of the filling is between 50:50 , 60:40 or 70:30.

12. The process of claim 1, a process for making ready to eat confection snack with center filling including fruit casing and filling, **characterized in that** it included the successive steps of :
(a) Preparing a filling material by mixed in mixing tank at temperature 28 to 60°C and having a total soluble solid in a range of 70 to 95 degrees Brix, moisture content in a range of 2 to 30 per cent and a water activity value of between 0.2 to 0.75;
(b) If a filling is jam-like having total soluble solid in a range 70 to 90 per cent, a moisture content of 25 to 30 per cent and active water in a range of 0.5 to 0.85;
(c) If a filling is sugar paste-like having a sugar content in a range 85 to 95 per cent, moisture content in a range 6 to 10 per cent and a water activity value of between 0.2 to 0.5 per cent.

13. The process of claim 1, a process for making chewy casing, **characterized in that** it included the successive steps of:
(a) Preparing the ingredients of chewy casing such as sugar, wheat flour, fruit puree, starch and gelling agent into a mixing tank;
(b) Chewy casing can be prepared in the mixing tank. Mixing the casing ingredients at a temperature in the range 50 to 65, or about 55°C until the casing mixture have total soluble solid in a range about 70 to 90 degrees Brix and moisture content in a range 8 to 13 weight per cent.
(c) The casing mixture can be passed through an extruder at a temperature in a range of 130 to 170°C and made to a sheet.

14. The process of claim 1, preparing the ingredients of chewy casing **characterised in that** it comprises:
(a) about 30 to 40 per cent of glucose;
(b) about 20 to 35 per cent of sugar;
(c) about 25 to 30 per cent of wheat flour;
(d) about 3 to 40 per cent of fruit puree.

15. The process of claim 13, a process for making chewy casing, **characterized in that** size of the sheets by extrusion are have a thickness in a range 0.5 to 3 mm.

16. The process of claim 13, **characterised in that** the size of the sheets by extruder can have the width of the sheets in a rang 250 to 500 mm.

17. The process of claim 1, **characterised in that** the process for making ready to eat confection snack with center filling having a moisture content in the range of 9 to13 weight per cent.

18. The process of claim 1, **characterised in that** the process for making ready to eat confection snack with center filling having a water activity of less than 0.75.

19. The process of claim 1, **characterised in that** the shapes of ready to eat confectionery snack with center filling are not limited to forming shapes.

20. The process of claim 1, **characterised in that** it the shapes of ready to eat confectionery snack with filling are not limited to forming shape including heart, pillow, bundles, round, triangle or more shapes.

21. The process of claim 1, **characterised in that** it the process for making ready to eat confectionery snack without filling.

22. The process of claim 1, **characterised in that** it the process for making ready to eat confectionery snack without filling **characterized in that** it included the successive steps of:
(a) Preparing the ingredients such as fruit puree, sugar, wheat flour, and gelling agent into a mixing tank;
(b) The product can be prepared in the mixing tank, mixing the case ingredients at a temperature in the range 50 to 65°C, or about 55°C until the casing mixture have total soluble solid in a range about 70-90 degree Brix and moisture content in a range 8 to 14 weight per cent;
(c) The casing mixture can be passed through an extruder at a temperature in a range of 130 to 170°C and being to a sheet.

23. The process of claim 1 **characterised in that** it the process for making ready to eat confectionery snack without filling are not limited to forming shapes.

24. The process of claim 19 **characterised in that** the shapes of ready to eat confectionery snack without filling are not limited to forming shapes including bow-tie, butterfly, or ribbon.
